# EUROPÄISCHE PATENTSCHRIFT

(11) **EP 1 849 682 B1**
(45) Veröffentlichungstag und Bekanntmachung des Hinweises auf die Patenterteilung: **19.08.2009**
(21) Anmeldenummer: 07104189.1
(22) Anmeldetag: 15.03.2007
(51) Int. Cl.: B62D 6/00, B62D 6/04

(54) **Verfahren zur Lenkungsregelung**
Method for controlling steering
Procédé destiné au réglage de la direction

(30) Priorität: 28.04.2006 DE 102006019790
(43) Veröffentlichungstag der Anmeldung: 31.10.2007
(73) Patentinhaber: ZF-Lenksysteme GmbH, 73527 Schwäbisch Gmünd (DE)
(72) Erfinder: Heger, Markus, D-73565 Spraitbach (DE); Greul, Roland, 73547, Lorch-Waldhausen (DE)

(56) Entgegenhaltungen:
- EP-A- 1 481 872
- EP-A- 1 683 706
- EP-A2- 0 846 610
- EP-A2- 1 000 838
- EP-A2- 1 215 103
- WO-A-02/090161
- WO-A1-01/81139
- DE-A- 10 141 425
- DE-A1- 10 226 683
- DE-A1- 10 356 509
- DE-A1-4102004 035 00
- JP-A- 2003 154 962

## Beschreibung

Die Erfindung betrifft ein Verfahren zur Regelung und/oder Steuerung einer elektrisch ansteuerbaren Lenkung mit einer elektrischen oder hydraulischen Servoeinheit gemäß dem Oberbegriff des Anspruchs 1.

Es gibt unterschiedliche Arten von elektrisch ansteuerbaren Lenkungen. Allen diesen Lenkungen ist gemein, dass die Servoeinheit einen Elektromotor umfasst, der direkt oder indirekt ein Unterstützungsmoment bereitstellt und/oder variiert, mit dem das vom Fahrer aufzubringende Handmoment herabsetzbar ist. Es wird unterschieden zwischen elektrohydraulischen Lenksystemen (EHPS), bei denen der Elektromotor den Antriebsmotor einer Hydraulikpumpe bildet und elektromechanischen Lenksystemen (EPS), bei denen der Elektromotor unmittelbar auf das Lenkgetriebe, insbesondere eine Zahnstange des Lenkgetriebes unterstützend einwirkt. Heutige elektrisch ansteuerbare Lenkungen weisen verschiedene Lenkungsfunktionen auf, mit denen das Lenkgefühl und die Fahrbahnrückmeldung verbessert werden, indem gewisse Eigenschaften von Lenkungskomponenten, wie z.B. Reibung oder Trägheit, oder des Fahrzeugs, wie z.B. die Achsrückstellung oder Stößigkeit aktiv vollständig oder teilweise kompensiert werden. Eine derartige Lenkungsfunktion ist beispielsweise die Unterstützungsfunktion. Bei dieser Funktion wird in Abhängigkeit des vom Fahrer aufgebrachten Handmoments ein Unterstützungsmoment berechnet, das die Lenkbewegung des Fahrers unterstützt. Eine weitere Funktion ist der aktive Lenkungsrücklauf. Bei dieser Funktion wird die mechanische Achsrückstellung des Fahrzeugs durch ein zusätzliches Unterstützungsmoment unterstützt und dadurch die Lenkungszentrierung im Geradeauslauf verbessert.

Nachteilig bei den bekannten elektrisch ansteuerbaren Lenkungen ist es, dass der momentane Fahrzustand dem Fahrer nur unzulänglich über die Lenkhandhabe rückgemeldet wird. Der Fahrer kann anhand des Lenkungsverhaltens nicht immer erkennen, ob er sich bereits in einer Grenzsituation befindet oder nicht. Insbesondere ein Übersteuern oder Untersteuern des Fahrzeugs wird dem Fahrer nur unzureichend über die Lenkung angezeigt, wodurch das Handling des Fahrzeugs in diesem Grenzbereich erschwert wird. Bei dem aktiven Lenkungsrücklauf besteht das Problem, dass die Fahrzeugräder im Gegensatz zu einer herkömmlichen Hydrauliklenkung immer in Richtung Fahrzeuglängsachse zentriert werden, auch wenn das Fahrzeug über- oder untersteuert. Dies kann zu einer Irritation des Fahrers führen, da das für den Fahrer spürbare Handmoment am Lenkrad entgegen der natürlichen und stabilisierenden Bewegungsrichtung der gelenkten Räder wirkt.

Aus der DE 100 61 966 A1 ist eine elektrisch ansteuerbare Lenkung mit einem Überlagerungsgetriebe bekannt. Aus der Druckschrift ist es bekannt, aufgrund eines Gierratensignals und einer Radlenkwinkelinformation das Überlagerungsgetriebe anzusteuern. Der Ansteuerung des Überlagerungsgetriebes wird also ein Signal zugrunde gelegt, das die räumlichen Bewegungsvorgänge des Fahrzeugs beschreibt. Durch die Ansteuerung des Überlagerungsgetriebes erfolgt jedoch keine oder nur unzureichende Rückmeldung des Fahrzustandes an den Fahrer, sondern lediglich eine Änderung des Übersetzungsverhältnisses des Lenkgetriebes.

Aus der DE 10 2005 012 548 A1 ist es ebenfalls bekannt, das Überlagerungsgetriebe einer Lenkung in Abhängigkeit des Fahrzustandes anzusteuern. Insbesondere wird das Übersetzungsverhältnis bei Erkennen eines Untersteuerns mit zunehmendem Betrag des Lenkradwinkels indirekter gestellt. Auch hier erfolgt dadurch, dass das Überlagerungsgetriebe angesteuert wird, keine Rückmeldung des Fahrzustandes an den Fahrer.

Auch aus der DE 10 2004 031 259 A1, der DE 10 2004 028 829 A1 und der DE 10 2005 012 584 A1 ist es bekannt, das Überlagerungsgetriebe in Abhängigkeit verschiedener Signale anzusteuern.

Die DE 10 2004 026 098 A1 und die DE 10 2005 009 373 A1 beschäftigen sich mit der Ansteuerung der Radbremsen in Abhängigkeit bestimmter Lenkungssignale.

Aus der DE 103 23 844 A1 ist es bekannt, das Fahrerlenkverhalten zu ermitteln, wobei aufgrund des Fahrerlenkverhaltens ein Zusatz-Lenkmoment mittels einer Servoeinheit erzeugbar ist. Hier erfolgt die Ansteuerung der Lenkung nicht anhand eines die tatsächlichen räumlichen Bewegungsvorgänge beschreibenden Signals sondern nur anhand des Fahrerverhaltens.

In der DE 102 26 683 A1 wird ein Fahrstabilitätsmanagement durch einen Fahrzeugreglerverbund beschrieben, bei dem durch Regeleingriffe die Fahrstabilität erhöht wird. Aus einem Soll-Ist-Vergleich wird eine Regelabweichung ermittelt, die der Berechnung eines Soll-Giermoments zu Grunde gelegt wird. Dieses Soll-Giermoment wird als Stellbefehl an einen Fahrzeugreglerverbund weitergeleitet, von dem ein aktives Fahrwerksystem, das Lenksystem und das Bremssystem angesteuert werden. Die Regelabweichung wird als Differenz der Ist-Giergeschwindigkeit mit der ermittelten Soll-Giergeschwindigkeit gebildet oder, gemäß einer weiteren Ausführungsvariante, durch einen Vergleich von Ist-Schwimmwinkel mit dem Soll-Schwimmwinkel. Bei der Ansteuerung der Fahrzeugsysteme wird eine bestimmte Reihenfolge eingehalten, indem zunächst das Fahrwerksystem, gefolgt vom Lenksystem und schließlich dem Bremssystem beaufschlagt wird.

Aus der EP 1 481 872 A1 ist ein Verfahren zur Regelung einer Lenkung bekannt, bei dem das Lenk-Unterstützungsmoment aus der Soll-Ist-Abweichung der Gierrate ermittelt wird. Hierbei kann ein so genannter Drift-Kennwert herangezogen werden, der den aktuellen Untersteuerungszustand des Fahrzeugs widerspiegelt und aus dem die Gierabweichung ermittelt wird.

Aus der WO 02/090161 A1 ist ein Verfahren zur Regelung des Fahrverhaltens eines Fahrzeuges bekannt, bei dem die Regelgrößen Kräfte bzw. Momente sind, die an den Rädern des Fahrzeugs wirken, wobei die Einflussnahme auf die Fahrdynamik des Fahrzeuges über Bremseingriffe oder Lenkeingriffe erfolgt.

Die DE 101 41 425 A beschreibt ein Verfahren zur Regelung einer elektrisch ansteuerbaren Lenkung nach dem Oberbegriff des Anspruchs 1.

Der Erfindung liegt die Aufgabe zugrunde, ein verbessertes Verfahren zur Regelung und/oder Steuerung einer elektrisch ansteuerbaren Lenkung vorzuschlagen, das eine verbesserte Rückmeldung des Fahrzustandes über die Lenkung an den Fahrer sicherstellt.

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, ein von der Servoeinheit eingeleitetes Unterstützungsmoment durch eine entsprechende Ansteuerung der Servoeinheit in Abhängigkeit des wenigstens einen genutzten Signals zu beeinflussen. Mit Vorteil erfolgt die Beeinflussung derart, dass in Grenzsituationen das teilweise selbstregulierende Verhalten einer herkömmlichen Hydrauliklenkung simuliert wird. Hierzu ist erfindungsgemäß vorgesehen, dass der Elektromotor der Servoeinheit bei einer elektromechanischen oder elektrohydraulischen Lenkung in Abhängigkeit mindestens eines Signals angesteuert wird, das den Fahrzustand des Fahrzeugs, also die räumlichen Bewegungsvorgänge des Fahrzeugs, beschreibt. Hierzu können lenkungsinterne oder im Systemverbund des Fahrzeugs vorhandene Signale genutzt werden. Durch die erfindungsgemäße Ansteuerung der Servoeinheit in Abhängigkeit des Fahrzustandes wird von der Servoeinheit ein Unterstützungsmoment bereitgestellt und/oder variiert, das sich unmittelbar über die Lenksäule auf das vom Fahrer aufzubringende bzw. gespürte Handmoment auswirkt. Hierdurch kann eine Irritation des Fahrers in Grenzsituationen vermieden werden, so dass dieser instinktiv richtig, wie er dies bei einer rein hydraulischen Lenkung tun würde, reagiert. Durch das erfindungsgemäße Verfahren kann insbesondere die Unterstützungsfunktion sowie die aktive Lenkungszentrierung optimiert werden, worauf später noch eingegangen wird.

In Ausgestaltung der Erfindung ist mit Vorteil vorgesehen, dass das den Fahrzustand beschreibende Signal von einer Elektronikeinheit bewertet wird. Hierzu wird das Signal mit einem Soll-Wert aus einem Referenzmodell bewertet. Das Referenzmodell beinhaltet in Kennlinien, Tabellen oder Polynomen den Soll-Wert für den aktuellen Fahrzustand.

Eingangsgrößen zur Bestimmung des Soll-Wertes anhand des Referenzmodells sind beispielsweise die Fahrzeuggeschwindigkeit und ein Lenkwinkel, also ebenfalls im Systemverbund des Fahrzeugs vorhandene Signale.

In Weiterbildung der Erfindung wird durch den Vergleich des mindestens einen Signals mit mindestens Soll-Wert ein Bewertungs-Kennwert ermittelt, der der Regelung und/oder Steuerung der Servoeinheit zugrunde gelegt wird. Bevorzugt wird das von der Servoeinheit bereitgestellte und/oder variierte Unterstützungsmoment in Abhängigkeit der Größe des Bewertungs-Kennwertes erhöht oder erniedrigt. Der Bewertungs-Kennwert kennzeichnet also die Kritizität des momentanen Fahrzustandes. Durch Variation des Unterstützungsmomentes durch die Servoeinheit in Abhängigkeit des Bewertungs-Kennwertes wird das vom Fahrer aufzubringende Handmoment aktiv beeinflusst, nämlich erniedrigt oder erhöht. Hierdurch wird dem Fahrer unmittelbar über die Lenkung der Grad der Instabilität des Fahrzustandes mitgeteilt. Dieser kann dann entsprechend reagieren.

Falls der ermittelte Bewertungs-Kennwert einen oder mehrere Vergleichswerte über- oder unterschreitet, liegt ein Übersteuern und/oder Untersteuern vor. In Weiterbildung der Erfindung ist nun vorgesehen, dass in einer derartigen Fahrsituation die Servoeinheit, bzw. der Elektromotor der Servoeinheit derart angesteuert wird, dass das Unterstützungsmoment erhöht wird, wodurch unmittelbar das vom Fahrer gespürte und aufzubringende Handmoment reduziert wird. Das Lenkrad lässt sich vom Fahrer also leichter drehen, wodurch der Fahrer instinktiv weiß, dass eine Gefährdungssituation vorliegt. Wenn es beispielsweise durch Fahren auf glatter Fahrbahn zu einem Untersteuern des Fahrzeugs kommt, wird gemäß der Erfindung, im Gegensatz zu herkömmlichen elektrisch ansteuerbaren Lenkungen das Handmoment herabgesetzt, wodurch die elektrisch ansteuerbare Lenkung exakt so reagiert, wie eine herkömmliche Hydrauliklenkung. Der Fahrer registriert dies und kann der Untersteuerungssituation durch entsprechendes aktives Verhalten entgegenwirken.

Mit Vorteil wird als das den Fahrzustand beschreibende Signal die Ist-Gierrate genutzt. Dabei kann die Ist-Gierrate unmittelbar gemessen oder in bekannter Weise auf Basis anderer Signale abgeschätzt bzw. ermittelt werden. Durch Vergleich der Ist-Gierrate mit der Soll-Gierrate wird ein Bewertungs-Kennwert ermittelt, der der Ansteuerung der Servoeinheit zugrunde liegt.

Ebenso ist es möglich, als das die Fahrsituation kennzeichnende Signal die an der Zahnstange anliegende Ist-Kraft zu nutzen und diese Ist-Kraft mit einer Soll-Kraft eines Referenzmodells zu vergleichen.

Zusätzlich oder alternativ zu den beiden vorgenannten Signalen kann auch der Ist-Schwimmwinkel zur Beschreibung des Fahrzustandes herangezogen werden. Dabei kann der Ist-Schwimmwinkel gemessen oder in bekannter Weise anhand von anderen Signalen geschätzt bzw. ermittelt werden. Bei dem Schwimmwinkel des Fahrzeugs handelt es sich um den Winkel zwischen dem Geschwindigkeitsvektor des Fahrzeugs, also der tatsächlichen Bewegungsrichtung des Fahrzeugs und der Fahrzeuglängsachse, vom Schwerpunkt des Fahrzeugs aus betrachtet - Geschwindigkeitsvektor und Fahrzeuglängsachse schneiden sich dabei im Schwerpunkt des Fahrzeugs.

Durch die Ausnutzung der Ist-Gierrate und/oder der Ist-Zahnstangenkraft und/oder des Ist-Schwimmwinkels und/oder anderer Signale zur Ansteuerung des Elektromotors der Hydraulikpumpe und/oder zur Ansteuerung des unmittelbar auf das Lenkgetriebe wirkenden Servomotors kann durch die zuvor beschriebenen Maßnahmen die Unterstützungsfunktion einer elektrisch ansteuerbaren Lenkung wesentlich verbessert werden. Der Vergleich der erwähnten Signale mit einem modellbasierten Nominalwert resultiert in einem Bewertungs-Kennwert für die Zustände Über- und Untersteuern, wobei der Bewertungs-Kennwert unmittelbar durch Ansteuerung der Servoeinheit das vom Fahrer aufzubringende Handmoment beeinflusst.

In Weiterbildung der Erfindung ist mit Vorteil vorgesehen, dass die Servoeinheit in Abhängigkeit des Ist-Schwimmwinkels derart angesteuert wird, dass die lenkbaren Fahrzeugräder nicht in Fahrzeuglängsrichtung zentriert werden, sondern dass die Zentrierung in die tatsächliche Bewegungsrichtung, also in Richtung des Geschwindigkeitsvektors erfolgt, wie dies bei einer herkömmlichen Hydrauliklenkung in bestimmten Fahrsituationen der Fall ist. Durch diese verbesserte Rücklauffunktion werden die lenkbaren Fahrzeugräder in die natürliche und stabilisierende Bewegungsrichtung ausgerichtet, wodurch eine Irritation des Fahrers vermieden wird. Bei herkömmlichen elektrisch ansteuerbaren Lenkungen erfolgt die Zentrierung der lenkbaren Fahrzeugräder nämlich immer parallel zur Fahrzeuglängsachse, was insbesondere bei Fahrten auf Glatteis oder glatter Straße bei entsprechend starkem Übersteuern den Fahrer verwirrt.

Ferner ist Gegenstand der Erfindung eine elektromechanische oder elektrischhydraulische Lenkung, bei der das zuvor beschriebene Befahren implementiert ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer elektromechanischen Lenkung mit einer als black box dargestellten Software-Steuerungs- und/oder Regelungseinheit,
- Fig. 2: ein linearisiertes Einspurmodell eines Fahrzeugs.

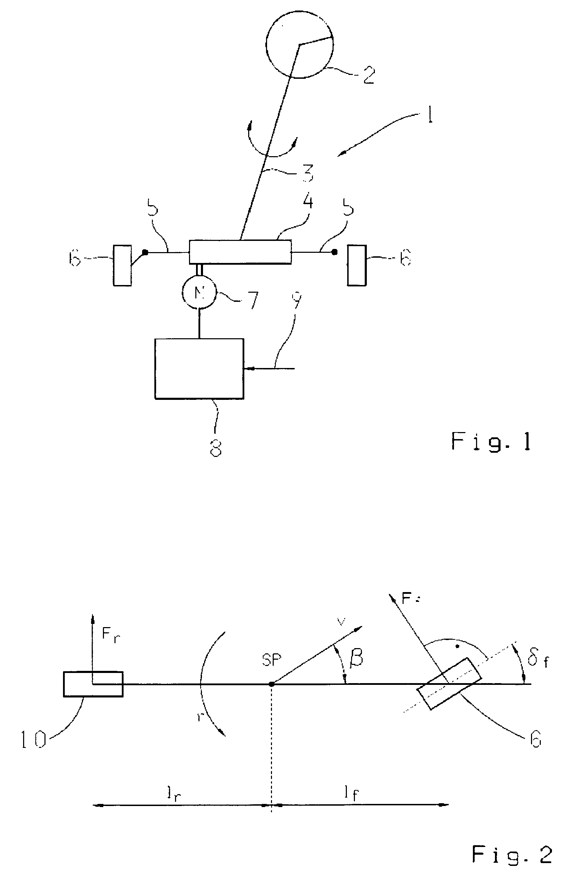

In Fig. 1 ist eine elektromechanische Lenkung 1 mit einem als Lenkrad ausgebildeten Lenkmittel 2 dargestellt. Das Lenkmittel 2 ist über eine Lenksäule 3 mit einem Lenkgetriebe 4 verbunden, welches die rotatorische Bewegung des Lenkmittels 2 in eine translatorische Bewegung umwandelt, welche über ein Gestänge 5 an vordere Fahrzeugräder 6 zur Verstellung des Fahrzeugradeinschlags übertragen wird. Auf das Lenkgetriebe 4 wirkt zusätzlich zur Unterstützung des vom Fahrer auf das Lenkmittel 2 aufgebrachte Handmoment ein Elektromotor 7 ein. Der Elektromotor 7 kann auch unmittelbar an der Lenksäule 3 angreifen. Eine Software-Steuerungs- und/oder Regelungseinheit 8 steuert den Elektromotor 7 in Abhängigkeit eines oder mehrerer Signale 9 an, die beispielsweise mittels nicht dargestellter Sensoren gemessen werden können. Anstelle eines Servomotors 7 kann zur Lenkkraftunterstützung auch eine Hydraulik vorgesehen werden, wobei die Hydraulikpumpe wiederum von einem Elektromotor angetrieben wird. In diesem Fall wird dieser Elektromotor von der Steuerungs- und/oder Regelungseinheit 8 in Abhängigkeit der Signale 9 angesteuert. Die Signale 9 beschreiben die räumlichen Bewegungsvorgänge des Fahrzeugs, also den Fahrzustand. Insbesondere eignen sich als Signale 9 die Gierrate oder Signale, aus denen die Gierrate ermittelbar ist, die Ist-Zahnstangenkraft und/oder der Schwimmwinkel oder Signale, aus denen der Schwimmwinkel ermittelbar bzw. abschätzbar sind. Hierzu können insbesondere die Fahrzeuggeschwindigkeit, ein mittlerer Radlenkwinkel, die Gierrate und/oder die Querbeschleunigung des Fahrzeugs herangezogen werden.

In Fig. 2 ist zur Verdeutlichung der zur Steuerung und/oder Regelung heranzuziehenden Signale 9 ein linearisiertes Einspurmodell des Fahrzeugs mit einem gelenkten Vorderrad 6 und einem Hinterrad 10 dargestellt. In diesem Modell bezeichnen F_{f} und Fᵣ die Seitenkraft am Vorderrad 6 bzw. Hinterrad 10, SP den Schwerpunkt des Fahrzeugs, r die Gierrate des Fahrzeugs, v den Betrag des Fahrgeschwindigkeitsvektors im Schwerpunkt SP, l_{f} und lᵣ den Abstand der Vorder- bzw. Hinterachse vom Schwerpunkt SP, δ_{f} den Vorderradlenkwinkel und β den Schwimmwinkel zwischen dem Geschwindigkeitsvektor v und der Fahrzeuglängsachse im Schwerpunkt SP.

Gemäß einem ersten Ausführungsbeispiel des erfindungsgemäßen Fahrens wird die Unterstützungsfunktion der elektrisch ansteuerbaren Lenkung 1 dahingehend verbessert, dass der Fahrzustand dem Fahrer über eine aktive Variation des Handmoments kommuniziert wird. Hierzu werden von der Einheit 8 in diesem Ausführungsbeispiel ein Gierratensignal eingelesen. Dieses wird in der Einheit 8 mit einer Soll-Gierrate verglichen. Diese wird anhand eines Referenzmodells von der Einheit 8 ermittelt, wobei etwaige Eingangsgrößen zur Ermittlung der Soll-Gierrate anhand des Referenzmodells die Fahrzeuggeschwindigkeit und der Lenkradwinkel sind. Es wird also die Ist-Gierrate r mit einer für die momentane Fahrsituation typischen bzw. gewünschten oder optimalen Soll-Gierrate verglichen. Aus dem Vergleich resultiert ein Bewertungs-Kennwert, der den Grad der Stabilität bzw. Instabilität des Fahrzustandes bewertet. In Abhängigkeit der Größe dieses Bewertungs-Kennwertes wird die Servoeinheit bzw. in diesem Ausführungsbeispiel der Elektromotor 7 angesteuert, so dass dieser ein Unterstützungsmoment bereitstellt bzw. variiert, wodurch aktiv das Handmoment geändert wird. Überschreitet oder unterschreitet der Bewertungs-Kennwert einen vorgegeben Vergleichswert, wird von der Einheit 8 beispielsweise auf ein Übersteuern geschlossen und der Elektromotor 7 derart angesteuert, dass das Unterstützungsmoment, bevorzugt schlagartig, erhöht wird, wodurch das Handmoment reduziert wird und der Fahrer den Fahrzustand, hier das Untersteuern, erkennt und entsprechend reagieren kann. Anstelle der Ist-Gierrate r können alternative oder zusätzliche Signale 9 mit den entsprechenden Soll-Werten verglichen werden und bevorzugt ein einheitlicher Bewertungs-Kennwert ermittelt werden, anhand dessen die Ansteuerung des Elektromotors 7 erfolgt.

Gemäß einem zweiten Ausführungsbeispiel wird aus den Signalen 9 ein Ist-Schwimmwinkel geschätzt. Auf Basis des Ist-Schwimmwinkels β wird von der Einheit 8 ein Offset-Lenkwinkel berechnet, der den Nullwinkel für den aktiven Rücklauf darstellt. Die Einheit 8 steuert die Servoeinheit bzw. den Elektromotor 7 derart an, dass dieser ein das Rückstellmoment beinhaltende Unterstützungsdrehmoment erzeugt, mit dem die Räder entsprechend des Offset-Lenkwinkels ausgerichtet werden. Dies spürt der Fahrer unmittelbar in einer Änderung des aufzubringenden Handmomentes.

### Bezugszeichenliste

- 1: Lenkung
- 2: Lenkmittel
- 3: Lenksäule
- 4: Lenkgetriebe
- 5: Lenkgestänge
- 6: Vorderräder
- 7: Servomotor
- 8: Steuerungs- und/oder Regelungseinheit
- 9: Signal (e)
- 10: Hinterrad
- SP: Fahrzeugschwerpunkt
- r: Gierrate
- v: Geschwindigkeitsvektor
- β: Schwimmwinkel
- F_{f}: Seitenkraft am Vorderrad
- Fᵣ: Seitenkraft am Hinterrad
- δ_{f}: Vorderrad-Lenkwinkel
- l_{f}: Abstand der Vorderachse vom Schwerpunkt
- lᵣ: Abstand der Hinterachse vom Schwerpunkt

## Patentansprüche

1. Verfahren zur Regelung und/oder Steuerung einer elektrisch ansteuerbaren Lenkung (1) mit einer elektrischen oder hydraulischen Servoeinheit (7) zur Bereitstellung und/oder Variation eines Unterstützungsmomentes, wobei zur Regelung und/oder Steuerung mindestens ein die räumlichen Bewegungsvorgänge des Fahrzeugs beschreibendes Signal (9) genutzt und ein von der Servoeinheit eingeleitetes Unterstützungsmoment durch eine entsprechende Ansteuerung der Servoeinheit in Abhängigkeit des wenigstens einen genutzten Signals (9) beeinflusst wird, wobei das genutzte Signal (9) ein Ist-Schwimmwinkelsignal (β) ist oder aus dem Signal (9) der Ist-Schwimmwinkel (β) des Fahrzeugs ermittelt wird **dadurch gekennzeichnet,**
**dass** nach Maßgabe des ermittelten Ist-Schwimmwinkels (β) die Vorgabe für einen Zentrierungswinkel oder einen Nullpunkt einer aktiven Rücklauffunktion der Lenkung (1) verschoben wird.

2. Verfahren nach Anspruch 1,
**dadurch gekennzeichnet,**
**dass** das Signal (9) durch einen Vergleich mit mindestens einem Soll-Wert aus einem Referenzmodell bewertet wird.

3. Verfahren nach Anspruch 2,
**dadurch gekennzeichnet,**
**dass** ein Bewertungs-Kennwert ermittelt wird, anhand dessen das von der Servoeinheit zur Verfügung zu stellende Unterstützungsmoment zur Variation des aufzubringenden Handmoments beeinflusst wird.

4. Verfahren nach Anspruch 3,
**dadurch gekennzeichnet,**
**dass** entsprechend der Größe des Bewertungs-Kennwertes das von der Servoeinheit bereitgestellte und/oder variierte Unterstützungsmoment erhöht oder erniedrigt und damit das aufzubringende Handmoment erniedrigt oder erhöht wird.

5. Verfahren nach Anspruch einem der Ansprüche 3 oder 4,
**dadurch gekennzeichnet,**
**dass** falls der Bewertungs-Kennwert um einen vorgegebenen Betrag von einem Vergleichswert abweicht, auf ein Übersteuern oder Untersteuern des Fahrzeugs geschlossen wird, und dass bei einem Übersteuern und/oder Untersteuern das Unterstützungsmoment erhöht und damit das aufzubringende Handmoment reduziert wird.

6. Verfahren nach Anspruch nach einem der Ansprüche 1 bis 5,
**dadurch gekennzeichnet,**
**dass** das genutzte Signal (9) die Ist-Gierrate (r) ist oder aus dem Signal (9) die Ist-Gierrate (r) ermittelt wird, und dass die Ist-Gierrate (r) mit einer Soll-Gierrate verglichen wird.

7. Verfahren nach einem der Ansprüche 1 bis 6,
**dadurch gekennzeichnet,**
**dass** das genutzte Signal (9) die an einer Zahnstange der Lenkung (1) anliegende Ist-Kraft ist, und dass die Ist-Kraft mit einer Soll-Kraft verglichen wird.

8. Verfahren nach einem der Ansprüche 1 bis 7,
**dadurch gekennzeichnet,**
**dass** die Servoeinheit in Abhängigkeit des Ist-Schwimmwinkels (β) derart angesteuert wird, dass die lenkbaren Fahrzeugräder in die tatsächliche Bewegungsrichtung des Fahrzeugs ausgerichtet werden.

9. Elektromechanische oder elektrohydraulische Lenkung in einem Kraftfahrzeug,
**dadurch gekennzeichnet,**
**dass** ein Verfahren nach einem der vorhergehenden Ansprüche implementiert ist.

## Claims

1. Method for performing closed-loop and/or open-loop control of a steering system (1) which can be actuated electrically and has an electric or hydraulic power steering unit (7) for making available and/or varying an assistance torque, wherein at least one signal (9) which describes the spatial movement processes of the vehicle is used to perform the closed-loop and/or open-loop control, and an assistance torque which is initiated by the power steering unit is influenced by corresponding actuation of the power steering unit as a function of the at least one signal (9) which is used, wherein the signal (9) which is used is an actual attitude angle signal (β), or the actual attitude angle (β) of the vehicle is determined from the signal (9), **characterized in that** the set value for a centring angle or a zero point of an active return function of the steering system (1) is shifted in accordance with the actual attitude angle (β) which is determined.

2. Method according to Claim 1,
**characterized**
**in that** the signal (9) is evaluated by comparison with at least one setpoint value from a reference model.

3. Method according to Claim 2,
**characterized**
**in that** an evaluation characteristic variable is determined and is used as a basis for influencing the assistance torque which is to be made available by the power steering unit in order to vary the manual torque which is to be applied.

4. Method according to Claim 3,
**characterized**
**in that** the assistance torque which is made available and/or varied by the power steering unit is increased or reduced in accordance with the magnitude of the evaluation characteristic value, and the manual torque which is to be applied is therefore reduced or increased.

5. Method according to one of Claims 3 or 4,
**characterized**
**in that**, if the evaluation characteristic variable differs from a comparison value by a predefined absolute value, it is concluded that the vehicle is experiencing oversteering or understeering, and in that, when oversteering and/or understeering occurs, the assistance torque is increased and the manual torque which is to be applied is therefore reduced.

6. Method according to one of Claims 1 to 5,
**characterized**
**in that** the signal (9) which is used is the actual yaw rate (r) or the actual yaw rate (r) is determined from the signal (9), and in that the actual yaw rate (r) is compared with a setpoint yaw rate.

7. Method according to one of Claims 1 to 6,
**characterized**
**in that** the signal (9) which is used is the actual force which is applied to a steering rack of the steering system (1), and in that the actual force is compared with a setpoint force.

8. Method according to one of Claims 1 to 7,
**characterized**
**in that** the power steering unit is actuated as a function of the actual attitude angle (β) in such a way that the steerable vehicle wheels are oriented in the actual direction of movement of the vehicle.

9. Electromechanical or electrohydraulic steering system in a motor vehicle,
**characterized**
**in that** a method according to one of the preceding claims is implemented.

## Revendications

1. Procédé pour régler et/ou commander une direction à commande électrique (1) avec une unité d'asservissement (7) électrique ou hydraulique, pour fournir et/ou faire varier un couple d'assistance, au moins un signal (9) décrivant les opérations de déplacement spatial du véhicule étant utilisé pour la régulation et/ou la commande, et un couple d'assistance introduit par l'unité d'asservissement étant influencé par une commande correspondante de l'unité d'asservissement en fonction de l'au moins un signal utilisé (9), le signal utilisé (9) étant un signal d'angle de flottement réel (β) ou étant détecté à partir du signal (9) de l'angle de flottement réel (β) du véhicule, **caractérisé en ce qu'**en fonction de l'angle de flottement réel détecté (β), la valeur prédéfinie pour un angle de centrage ou un point d'origine d'une fonction active de renvoi de la direction (1) est déplacée.

2. Procédé selon la revendication 1,
**caractérisé en ce que** le signal (9) est analysé par comparaison avec au moins une valeur de consigne d'un modèle de référence.

3. Procédé selon la revendication 2,
**caractérisé en ce que** l'on détermine une valeur caractéristique d'analyse, à l'aide de laquelle le couple de transmission à fournir par l'unité d'asservissement est influencé pour faire varier le couple manuel à appliquer.

4. Procédé selon la revendication 3,
**caractérisé en ce que** en fonction de la grandeur de la valeur caractéristique d'analyse, le couple de transmission fourni et/ou modifié par l'unité d'asservissement est augmenté ou réduit et ainsi le couple manuel à appliquer est réduit ou augmenté.

5. Procédé selon l'une quelconque des revendications 3 ou 4,
**caractérisé en ce que** si la valeur caractéristique d'analyse s'écarte d'une valeur comparative d'une mesure prédéfinie, on en déduit un survirage ou un sous-virage du véhicule, et **en ce que** dans le cas d'un survirage et/ou d'un sous-virage, le couple d'assistance est augmenté et donc le couple manuel à appliquer est réduit.

6. Procédé selon l'une quelconque des revendications 1 à 5,
**caractérisé en ce que** le signal utilisé (9) est la vitesse de lacet réelle (r) ou l'on détermine la vitesse de lacet réelle (r) à partir du signal (9), et **en ce que** la vitesse de lacet réelle (r) est comparée avec une vitesse de lacet de consigne.

7. Procédé selon l'une quelconque des revendications 1 à 6,
**caractérisé en ce que** le signal utilisé (9) est la force réelle s'appliquant à une crémaillère de la direction (1), et **en ce que** la force réelle est comparée à une force de consigne.

8. Procédé selon l'une quelconque des revendications 1 à 7,
**caractérisé en ce que** l'unité d'asservissement est commandée en fonction de l'angle de flottement réel (β) de telle sorte que les roues du véhicule dirigeables soient orientées dans la direction effective de mouvement du véhicule.

9. Direction électromécanique ou électrohydraulique dans un véhicule automobile,
**caractérisée en ce que** l'on met en oeuvre un procédé selon l'une quelconque des revendications précédentes.
